# EUROPÄISCHE PATENTSCHRIFT

(11) **EP 4 028 672 B1**
(45) Veröffentlichungstag und Bekanntmachung des Hinweises auf die Patenterteilung: **14.02.2024**
(21) Anmeldenummer: 20767723.8
(22) Anmeldetag: 26.08.2020
(51) Int. Cl.: F16C 19/56, B60K 6/40, F16C 19/36, F16D 1/10

(54) **DREHMOMENT-ÜBERTRAGUNGSSYSTEM MIT KONZENTRISCH ANGEORDNETEN WÄLZLAGERN, ANTRIEBSEINHEIT UND ANTRIEBSANORDNUNG**
TORQUE TRANSMITTING SYSTEM WITH CONCENTRIC ARRANGED ROLLING BEARINGS, DRIVE UNIT AND DRIVE ARRANGEMENT
SYSTÈME DE TRANSMISSION DE COUPLE DE ROTATION AVEC ROULEMENTS AGENCÉS CONCENTRIQUEMENT, UNITÉ D'ENTRAÎNEMENT ET ENSEMBLE D'ENTRAÎNEMENT

(30) Priorität: 10.09.2019 DE 102019124254
(43) Veröffentlichungstag der Anmeldung: 20.07.2022
(73) Patentinhaber: Schaeffler Technologies AG & Co. KG, 91074 Herzogenaurach (DE)
(72) Erfinder: STOBER, Benjamin, 67480 Forstfeld (FR); LEHMANN, Steffen, 76275 Ettlingen (DE)
(86) Internationale Anmeldenummer: PCT/DE2020/100751
(87) Internationale Veröffentlichungsnummer: WO 2021/047728

(56) Entgegenhaltungen:
- WO-A1-2008/092447
- WO-A1-2008/092448
- WO-A1-2015/057126
- WO-A1-2015/057137
- DE-A1- 3 716 098
- DE-A1- 3 828 351
- DE-A1-102017 127 695
- US-A- 877 835
- US-A- 2 553 536

## Beschreibung

Die Erfindung betrifft ein Drehmoment-Übertragungssystem, eine Antriebseinheit für einen Antriebsstrang eines elektrisch antreibbaren Kraftfahrzeugs, insbesondere eines Hybridkraftfahrzeuges, und eine Antriebsanordnung.

Aus dem Stand der Technik sind diverse Antriebsstränge mit Antriebseinheiten für elektrisch antreibbare Kraftfahrzeuge und Antriebsanordnungen bekannt, welche unter anderem eine Verbrennungskraftmaschine und zumindest eine, insbesondere zwei, elektrische Maschinen umfassen.

Die DE 10 2015 222 690 A1, DE 10 2015 222 691 A1 sowie WO 2017 084 887 A1 beschreiben dazu Verfahren zum Steuern derartiger Antriebseinheiten, wobei die Antriebseinheit in mehreren Betriebsmodi betreibbar ist. WO 2008/092447 offenbart auch eine solche Antriebseinheit.

In der DE 10 2015 222 690 A1 wird vorwiegend ein serieller Hybridbetrieb erläutert, in dem das Fahrantriebsdrehmoment mittels der zweiten Elektromaschine bewirkt wird und die Verbrennungskraftmaschine die erste Elektromaschine zur Erzeugung von elektrischer Energie antreibt. Beschrieben ist, wie die Verbrennungskraftmaschine an einem Arbeitspunkt basierend auf einem kombinierten Wirkungsgrad betrieben wird, der von dem Wirkungsgrad der Verbrennungskraftmaschine und von dem Wirkungsgrad der ersten Elektromaschine abhängt.

In den Dokumenten DE 10 2015 222 691 A1 und WO 2017 084 887 A1 werden ein leistungsorientierter sowie ein verbrauchsorientierter Modus beschrieben, wobei ein jeweiliger Modus von einer Bedingung abhängig ist. Diese Bedingung weist auf, dass ein Sollantriebswert auf einen Zwischenwert erhöht wird, der zwischen einer Verbrennungskraftmaschinen-Schwelle, die einen maximalen Antriebswert in einem parallelen Hybridbetrieb repräsentiert, in dem ausschließlich die Verbrennungskraftmaschine ein Fahrantriebsdrehmoment bewirkt, und einer Parallelhybridbetrieb-Schwelle, die einen maximalen Antriebswert in dem parallelen Boost-Hybridbetrieb repräsentiert, liegt.

Die DE 10 2015 222 692 A1, WO 2017 084 888 A1, DE 10 2015 222 694 A1 sowie WO 2017 084 889 A1 beschreiben ein Verfahren zum Betreiben einer Antriebseinrichtung eines Hybridfahrzeugs zum Antreiben eines Antriebsrads, wobei die Antriebseinrichtung eine Verbrennungskraftmaschine, eine mit der Verbrennungskraftmaschine gekoppelte erste Elektromaschine, eine zweite Elektromaschine, einen elektrischen Akkumulator und eine Hauptkupplung zwischen der Verbrennungskraftmaschine und dem Antriebsrad umfasst.

In der DE 10 2015 222 692 A1 sowie der WO 2017 084 888 A1 wird beschrieben, dass die Antriebseinrichtung in einem von drei Betriebsmodi betrieben wird, nämlich in einem rein elektrischen Betrieb, einem seriellen Hybridbetrieb oder einem parallelen Hybridbetrieb. Dabei entspricht das während des Wechsels von dem ersten Betriebsmodus in den zweiten Betriebsmodus bereitgestellte Fahrantriebsdrehmoment einem geeignet wählbaren Verlauf zwischen dem vor und nach dem Wechsel bereitgestellten Fahrantriebsdrehmoment.

DE 10 2015 222 694 A1 und WO 2017 084 889 A1 offenbaren, dass zwischen der Verbrennungskraftmaschine und dem Antriebsrad weiterhin ein Getriebe umfasst ist. Das Verfahren weist hier auf:
- Betreiben der Verbrennungskraftmaschine bei einer ersten Drehzahl für den ersten Gang in einem parallelen Hybridbetrieb, während ein erster Gang des Getriebes eingelegt ist;
- Wechseln in einen seriellen Hybridbetrieb;
- Öffnen der Hauptkupplung;
- Einstellen einer Drehzahl der Verbrennungskraftmaschine bei geöffneter Hauptkupplung auf eine zweite Drehzahl für einen zweiten Gang des Getriebes in dem parallelen Hybridbetrieb;
- Einlegen des zweiten Ganges des Getriebes;
- Schließen der Hauptkupplung; und
- Wechseln in den parallelen Hybridbetrieb, während der zweite Gang eingelegt ist.

Des Weiteren beschreibt ein jeweiliges zuvor genanntes Dokument ein Hybridfahrzeug, welches ein jeweiliges Verfahren ausführen kann.

Aus der WO 2019 105 504 A1 ist eine Antriebseinheit für einen Antriebsstrang eines Hybridkraftfahrzeuges bekannt, mit einer Verbrennungskraftmaschine, einer ersten elektrischen Maschine, einer zweiten elektrischen Maschine, einer ersten Übersetzungsstufe und einer Triebwelle der ersten elektrischen Maschine und/oder der zweiten elektrischen Maschine. Des Weiteren umfasst die Antriebseinheit eine Getriebeteileinheit, über die die Triebwelle der jeweiligen elektrischen Maschine mit Radantriebswellen gekoppelt oder koppelbar ist. Eine zweite Übersetzungsstufe ist mit einer Vorgelegeeinheit gekoppelt, wobei die Vorgelegeeinheit eine integrierte Kupplung aufweist und so mit den Radantriebswellen weiter verbunden ist, dass in Abhängigkeit der Stellung dieser Kupplung die Verbrennungskraftmaschine über die zweite Übersetzungsstufe mit den Radantriebswellen koppelbar ist.

Die WO 2019 101 264 A1 lehrt einen Antriebsstrang für ein Hybridkraftfahrzeug, welcher eine Getriebeeingangswelle aufweist, die über einen ersten Teilantriebsstrang mit einer ersten elektrischen Maschine und einer Verbrennungskraftmaschine zur Drehmomentübertragung in Wirkbeziehung steht und die über einen zweiten Teilantriebsstrang mit einer zweiten elektrischen Maschine zur Drehmomentübertragung in Wirkbeziehung steht. Die zweite elektrische Maschine ist dauerhaft mit der Getriebeeingangswelle drehmomentübertragend verbunden und die erste elektrische Maschine und die Verbrennungskraftmaschine sind koppelbar zur Drehmomentübertragung mit der Getriebeeingangswelle verbindbar.

Des Weiteren ist ein Hybridmodul für ein Kraftfahrzeug zum Ankoppeln einer Verbrennungskraftmaschine bekannt, welches eine erste Antriebswelle und dieser zugeordnet eine erste elektrische Maschine sowie eine erste Kupplungseinrichtung umfasst. Das Hybridmodul umfasst zudem eine zweite Antriebswelle und eine zweite elektrische Maschine sowie eine zweite Kupplungseinrichtung. Außerdem weist das Hybridmodul ein Abtriebselement auf. Eine jeweilige Antriebswelle ist über eine jeweilige Kupplungseinrichtung mit dem Abtriebselement verbindbar bzw. verbunden. Es ist hier vorgesehen, dass die beiden Kupplungseinrichtungen durch eine Bewegung eines mit beiden Kupplungseinrichtungen mechanisch gekoppelten Betätigungselements gleichzeitig betätigbar sind.

Der Stand der Technik umfasst weiterhin eine Antriebseinheit für einen Antriebsstrang eines Hybridkraftfahrzeuges, umfassend eine erste elektrische Maschine, eine zweite elektrische Maschine und eine Getriebeeingangswelle als Ausgangswelle, wobei ein Rotor der zweiten elektrischen Maschine drehfest mit der Ausgangswelle verbunden ist. Die Antriebseinheit weist weiterhin eine Trennkupplung auf, mit der ein Rotor der ersten elektrischen Maschine und damit eine an einer mit dem Rotor der ersten elektrischen Maschine drehfest verbundenen ersten Welle angeschlossene Verbrennungskraftmaschine zur Drehmomentübertragung mit der Ausgangswelle verbindbar oder verbunden ist. Es ist dabei vorgesehen, dass der Rotor einer der elektrischen Maschinen zumindest indirekt radial am Rotor der anderen elektrischen Maschine mittels wenigstens einem Rotationslager abgestützt ist.

Bei bekannten Antriebseinheiten für einen Antriebsstrang eines elektrisch antreibbaren Kraftfahrzeugs ist in der Regel vorgesehen, dass ein Drehmoment-Übertragungssystem zur Übertragung eines Drehmoments zwischen der Verbrennungskraftmaschine und zumindest einer elektrischen Maschine vorgesehen ist.

Ein derartiges Drehmoment-Übertragungssystem weist bekanntlich ein sogenanntes Hohlrad als Drehmoment-Übertragungselement zwischen den Antriebsaggregaten des Antriebsstrangs mit der bekannten Antriebseinheit auf.

Ein Drehmoment-Übertragungssystem für den Antrieb eines Pumpenrades ist z.B. aus der DE 37 16 098 A1 bekannt.

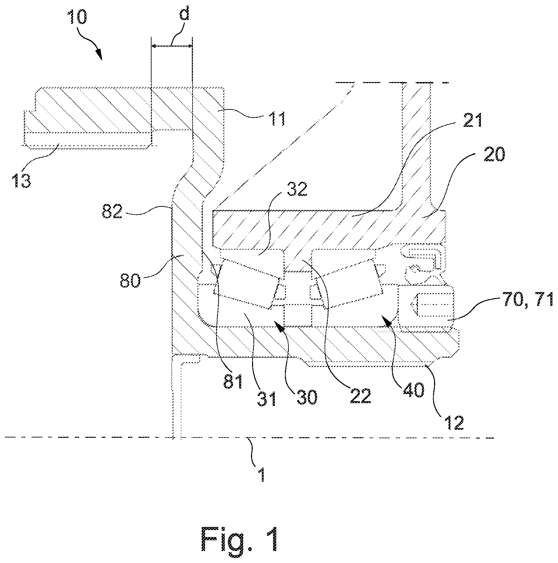

Figur 1 zeigt ein derartiges Drehmoment-Übertragungssystem 10 gemäß dem Stand der Technik.

Das Drehmoment-Übertragungssystem 10 umfasst ein Drehmoment-Übertragungselement 11 sowie ein Stützelement 20.

Das Drehmoment-Übertragungselement 11 ist als sogenanntes Hohlrad ausgestaltet und weist dazu einen sich radial erstreckenden Steg 80 auf. Das Drehmoment-Übertragungselement 11 weist an der ersten axialen Seite 81 des Stegs 80 eine erste Anschlusseinrichtung 12 und an der zweiten axialen Seite 82 des Stegs 17 eine zweite Anschlusseinrichtung 13 auf. Die erste Anschlusseinrichtung 12 dient dem zumindest mittelbaren Anschluss des Drehmoment-Übertragungselements 11 an eine Verbrennungskraftmaschine und die zweite Anschlusseinrichtung 13 dient dem zumindest mittelbaren Anschluss des Drehmoment-Übertragungselements 11 an zumindest eine elektrische Rotationsmaschine. In axialer Richtung zwischen der zweiten Anschlusseinrichtung 13 und der zweiten axialen Seite 82 des Stegs 80 weist das Drehmoment-Übertragungselement 11 zudem einen Werkzeugauslauf d auf zwecks Ermöglichung eines Auslaufs eines Fräs- oder Wälzschäl-Werkzeugs bei der Fertigung der als Verzahnung ausgestalteten zweiten Anschlusseinrichtung 13.

Auf der ersten axialen Seite 81 des Stegs 80 stützt sich das Drehmoment-Übertragungselement 11 über zwei Drehlager 30, 40 am Stützelement 20 ab. Das Stützelement 20 ist dabei ein rotationsfester Bestandteil eines Gehäuses eines Antriebsaggregats und weist einen sich axial erstreckenden Absatz 21 sowie einen vom Absatz 21 an seiner radialen Innenseite ausgebildeten Vorsprung 22 auf.

Das erste Drehlager 30 ist mit seinem Innenring 32 auf der radialen Außenseite des die erste Anschlusseinrichtung 12 aufweisenden Abschnitts des Drehmoment-Übertragungselement s11 angeordnet und liegt in axialer Richtung an der ersten axialen Seite 81 des Stegs 80 an. Ein Außenring 31 des ersten Drehlagers 30 liegt radial an der radialen Innenseite des Absatzes 21 des Stützelements 20 und axial auf der dem Steg 80 zugewandten axialen Seite des Vorsprungs 22 an.

Das zweite Drehlager 40 ist mit seinem Innenring 42 ebenfalls auf der radialen Außenseite des die erste Anschlusseinrichtung 12 aufweisenden Abschnitts des Drehmoment-Übertragungselements 11 angeordnet und liegt in axialer Richtung an einem Sicherungselement 70 an. Ein Außenring 41 des zweiten Drehlagers 40 liegt radial an der radialen Innenseite des Absatzes 21 des Stützelements 20 und axial auf der dem Steg 80 abgewandten axialen Seite des Vorsprungs 22 an.

Das Sicherungselement 70 ist als eine Mutter 71 ausgestaltet, welche auf der radialen Außenseite des die erste Anschlusseinrichtung 12 aufweisenden Abschnitts des Drehmoment-Übertragungselements 11 angeordnet ist und dort zum Zweck der Sicherung der axialen Positionen der Drehlager 30, 40 mit diesem Abschnitt verschraubt ist.

Mittels der Lagerung des Drehmoment-Übertragungselements 11 über die beiden axial nebeneinander angeordneten Drehlager 30, 40 am Stützelement 20 ist das Drehmoment-Übertragungselement 11 um eine Rotationsachse 1 drehbar und in axialer sowie radialer Richtung am Stützelement 20 abgestützt.

Durch eine axial benachbarte Anordnung der Drehlager gemäß Figur 1 muss für das Drehmoment-Übertragungssystem entsprechend ausreichend axialer Bauraum vorgesehen sein. O Zwecks kostengünstiger Fertigung der zweiten Anschlusseinrichtung ist zudem ein genügend langer Werkzeug-Auslauf vorzusehen, der weiteren axialen Bauraumbedarf aufweist.

Hiervon ausgehend liegt der vorliegenden Erfindung die Aufgabe zugrunde, ein Drehmoment-Übertragungssystem sowie eine damit ausgestattete Antriebseinheit für einen Antriebsstrang eines elektrisch antreibbaren Kraftfahrzeugs und eine Antriebsanordnung zur Verfügung zu stellen, die kostengünstig in konstruktiv einfacher Weise geringen axialen Bauraumbedarf realisieren.

Die Aufgabe wird durch das erfindungsgemäße Drehmoment-Übertragungssystem nach Anspruch 1 gelöst. Vorteilhafte Ausgestaltungen des Drehmoment-Übertragungssystems sind in den Unteransprüchen 2 bis 8 angegeben.

Ergänzend wird eine Antriebseinheit für einen Antriebsstrang eines elektrisch antreibbaren Kraftfahrzeugs, welche das Drehmoment-Übertragungssystem aufweist, gemäß Anspruch 9 zur Verfügung gestellt.

Weiterhin wird eine Antriebsanordnung mit einer Antriebseinheit gemäß Anspruch 10 zur Verfügung gestellt.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Begriffe "axial" und "radial" beziehen sich im Rahmen der vorliegenden Erfindung immer auf die Rotationsachse des Drehmoment-Übertragungssystems.

Die Erfindung betrifft ein Drehmoment-Übertragungssystem zur Übertragung eines Drehmoments von wenigstens einem Antriebsaggregat. Das Drehmoment-Übertragungssystem umfasst ein Drehmoment-Übertragungselement sowie ein das Drehmoment-Übertragungselement mittels Drehlager stützendes Stützelement, wobei das Drehmoment-Übertragungselement eine erste Anschlusseinrichtung, als eine erste Verzahnung, zur drehfesten Kopplung des Drehmoment-Übertragungselements mit einem ersten Aggregat sowie eine zweite Anschlusseinrichtung, ausgestaltet als eine zweite Verzahnung, zur Kopplung des Drehmoment-Übertragungselements mit einem zweiten Aggregat aufweist. Eines der beiden Elemente Drehmoment-Übertragungselement und Stützelement bildet einen im Wesentlichen hohlzylinderförmigen Absatz aus und das jeweils andere Element bildet eine Außenseite eines Zylinders und diesbezüglich radial außen eine Innenseite eines Hohlzylinders aus. Der Absatz ist in radialer Richtung zwischen der Außenseite des Zylinders und der Innenseite des Hohlzylinders angeordnet. Zwischen der Außenseite des Zylinders und dem Absatz ist ein erstes Drehlager angeordnet und zwischen dem Absatz und der Innenseite des Hohlzylinders ist ein zweites Drehlager angeordnet. Das erste Aggregat kann zu Beispiel eine Verbrennungskraftmaschine sein. Das zweite Aggregat kann zum Beispiel eine elektrische Antriebseinrichtung sein, die sowohl als Elektromotor als auch als elektrischer Generator funktionieren kann. Durch das Drehmoment-Übertragungssystem wird eine Kopplung der Betriebe der einzelnen Aggregate ermöglicht, wie z.B. ein verbrennungsmotorischer Betrieb bei gleichzeitigem Generato- Betrieb der elektrischen Antriebseinrichtung; oder auch ein sogenannter Boost-Betrieb, bei dem die Antriebsleistungen der Verbrennungskraftmaschine sowie der als Elektromotor betriebenen elektrischen Antriebseinrichtung vereint werden. Bei Zwischenschaltung einer Kupplung zwischen die Verbrennungskraftmaschine und die elektrische Antriebseinrichtung kann jedes dieser beiden Aggregate gegebenenfalls auch unabhängig von dem jeweils anderen Aggregat angetrieben werden.

Es ist erfindungsgemäß vorgesehen, dass die beiden zur Radial-Lagerung des Drehmoment-Übertragungselements eingesetzten Drehlager radial versetzt zueinander angeordnet sind. Dadurch lässt sich in axialer Richtung der beanspruchte Bauraum minimieren. Die Drehlager sind dabei insbesondere Wälzlager.

Das Drehmoment-Übertragungselement ist ein sogenanntes Hohlrad. Vorzugsweise ist das Stützelement Bestandteil bzw. ein Abschnitt eines feststehenden Gehäuses eines Antriebsaggregats, wie zum Beispiel ein Gehäuse eines Antriebsaggregats.

Insbesondere ist vorgesehen, dass sich der im Wesentlichen hohlzylinderförmige Absatz im Wesentlichen koaxial zu einer Rotationsachse des Drehmoment-Übertragungselements erstreckt.

Dass die Innenseite eines Hohlzylinders bezüglich der Außenseite eines Zylinders radial außen angeordnet ist bedeutet, dass die Innenseite des Hohlzylinders im Wesentlichen radial außen, insbesondere in einem radial äußeren Bereich des Drehmoment- Übertragungssystems, ausgebildet ist und Außenseite des Zylinders im Wesentlichen radial innen, insbesondere in Nähe zur Rotationsachse des Drehmoment-Übertragungssystems, ausgebildet ist.

Vorzugsweise sind das erste Drehlager und/oder das zweite Drehlager als Radiallager ausgeführt, wobei eine jeweilige axiale Tragfähigkeit nicht ausgeschlossen werden soll.

Radial zwischen der Außenseite des Zylinders und dem Absatz kann insbesondere eine radial wirkende Dichtung angeordnet sein.

Gemäß einem weiteren Aspekt der Erfindung weisen die beiden Drehlager im Wesentlichen die gleiche axiale Position in Bezug zu einer gemeinsamen Rotationsachse auf.

Das bedeutet, dass eines der Drehlager auf einem kleineren Durchmesser angeordnet ist als das andere Drehlager und die beiden Drehlager damit an der gleichen axialen Position ineinander verschachtelt sind.

Insbesondere ist wenigstens eines der Drehlager als Wälzlager, insbesondere als Kegelrollenlager, ausgeführt.

Weitere Alternativen für die verwendeten Lagertypen sind Rillenkugellager oder auch Schrägkugellager, in Abhängigkeit von der jeweiligen radialen aber insbesondere auch der axialen Belastung des jeweiligen Lagers.

Insbesondere sind beide Drehlager als Kegelrollenlager ausgeführt, wobei die Drucklinien beider Lager in Bezug auf die gemeinsame Rotationsachse eine Steigung mit gleichem Vorzeichen haben.

Das bedeutet, dass bei Übertragung der Drucklinien in ein kartesisches Koordinatensystem die Drucklinien im Wesentlichen parallel verlaufen, wie zum Beispiel mit einem negativen Anstieg. Entsprechend verlaufen die Rotationsachsen der Kegelrollen in diesem kartesischen Koordinatensystem mit einem positiven Anstieg. Bei im Wesentlichen gleicher Ausgestaltung der beiden Kegelrollenlager können die Drehachsen der einzelnen Kegelrollen an gleichen Winkelpositionen im Wesentlichen parallel zueinander verlaufen.

Dadurch ist eine axiale Verspannung bzw. Positionierung des Drehmoment-Übertragungselements in Bezug zum Stützelement gewährleistet.

Gemäß einer weiteren vorteilhaften Ausführungsform weist der Absatz einen von der Hohlzylinderform nach radial innen verlaufenden Vorsprung auf zur axialen Anlage eines Außenrings des ersten Drehlagers. Zudem weist der Absatz einen von der Hohlzylinderform nach radial außen verlaufenden Abschnitt auf zur axialen Anlage eines Innenrings des zweiten Drehlagers.

Gemäß einer weiteren Ausführungsform des Drehmoment-Übertragungssystems weist eines der beiden Elemente Drehmoment-Übertragungselement und Stützelement einen radial verlaufenden Abschnitt auf zur axialen Anlage eines Außenrings des zweiten Drehlagers.

Das den radial verlaufenden Abschnitt aufweisende Element ist entsprechend nicht das Element, das den Absatz ausbildet, auf welchem der Innenring des zweiten Drehlagers angeordnet ist.

Es kann vorgesehen sein, dass an der Außenseite des Zylinders ein axial wirkendes Sicherungselement, wie zum Beispiel ein Sicherungsring oder auch eine Mutter, zur axialen Anlage eines Innenrings des ersten Drehlagers angeordnet ist.

Bei der Verwendung eines Sicherungsrings ist vorzugsweise axial zwischen dem Innenring des ersten Drehlagers und dem Sicherungsring eine Ausgleichsscheibe zur Einstellung des axialen Abstandes anzuordnen.

In einer weiteren Ausführungsform ist der Zylinder als ein weiterer Hohlzylinder ausgebildet und die erste Anschlusseinrichtung ist an der Innenwandung dieses weiteren Hohlzylinders ausgebildet.

Insbesondere ist die erste Anschlusseinrichtung als eine Steckverzahnung ausgebildet, welche dazu eingerichtet ist, mit einer komplementären Außenverzahnung in Eingriff gebracht zu werden und derart von dieser ein Drehmoment aufzunehmen. Die erste Anschlusseinrichtung ist vorzugsweise an im Wesentlichen derselben axialen Position wie die beiden Drehlager, allerdings in Bezug zu diesen radial innen angeordnet.

In einer konstruktiv einfachen und vorteilhaften Ausführungsform weist das Drehmoment-Übertragungselement einen im Wesentlichen radial verlaufenden Steg auf, an dessen erster axialer Seite die Drehlager angeordnet sind, und an dessen zweiter, axial gegenüberliegender axialer Seite die zweite Anschlusseinrichtung als zweite Verzahnung ausgebildet ist, wobei entlang der axialen Richtung zwischen der zweiten Verzahnung und dem Steg ein Werkzeugauslauf vorhanden ist. Insbesondere ist die zweite Verzahnung eine Innen-Schrägverzahnung, welche an einem den axialen Fortsatz der Innenseite des Hohlzylinders ausbildenden und sich axial über den Steg hinweg erstreckenden Abschnitt des Drehmoment-Übertragungselements angeordnet ist.

Aufgrund dessen, dass über eine derartige Schrägverzahnung auch axiale Kräfte übertragen werden, ist vorzugweise vorgesehen, dass das zweite, radial weit außen angeordnete Drehlager das Lager mit der höheren Tragfähigkeit ist, da dieses dichter an der ebenfalls radial weiter außen angeordneten Schrägverzahnung angeordnet ist. Der Steg, ausgehend von dem radial inneren Zylinder des Drehmoment-Übertragungselements, verläuft im Wesentlichen in seinem Querschnitt linear zum weiteren Hohlzylinder des Drehmoment-Übertragungselements. Axial zwischen dem Steg und der zweiten Verzahnung ist durch den Werkzeugauslauf genug Freiraum, dass ein Fräser oder auch ein Wälzschäler bei der Herstellung der zweiten Verzahnung am axialen, dem Steg zugewandten Endbereich einen Auslauf hat, ohne den Steg zu beschädigen.

Der Werkzeugauslauf d, gemessen von einem dem Steg zugewandten Ende der zweiten Verzahnung, bis zum Steg steht in folgendem Verhältnis zur Zahnhöhe Zh der zweiten Verzahnung: d > 5 Zh.

Gemäß einem weiteren Aspekt bildet das Stützelement den im Wesentlichen hohlzylinderförmigen Absatz aus.Das Drehmoment-Übertragungselement bildet die Außenseite des Zylinders aus, wobei diesbezüglich radial außen die Innenseite des Hohlzylinders ausgebildet ist.

Das erfindungsgemäße Drehmoment-Übertragungssystem weist den Vorteil auf, dass aufgrund der erfindungsgemäßen Lageranordnung ein ausreichend großer Werkzeugauslauf zur Verfügung gestellt werden kann, der eine kostengünstige Verzahnungs-Herstellung, wie zum Beispiel mittels Fräsen oder Wälzschälen, gewährleistet.

Des Weiteren wird erfindungsgemäß eine Antriebseinheit für einen Antriebsstrang eines elektrisch antreibbaren Kraftfahrzeugs, insbesondere eines Hybridkraftfahrzeuges, zur Verfügung gestellt, der ein erfindungsgemäßes Drehmoment-Übertragungssystem, eine elektrische Antriebseinrichtung und eine Welle aufweist, wobei ein Rotor elektrischen Antriebseinrichtung drehfest mit der Welle verbunden ist und die Welle mit dem Drehmoment-Übertragungselement des Drehmoment-Übertragungssystems zur Übertragung eines Drehmoments gekoppelt ist.

Die Verbindung zwischen dem Drehmoment-Übertragungselement und der Welle ist über die zweite Anschlusseinrichtung des Drehmoment-Übertragungselements realisiert. Bei einer Ausführung der zweiten Anschlusseinrichtung als Schrägverzahnung ist vorgesehen, dass mit dieser Schrägverzahnung ein ebenfalls mit einer Schrägverzahnung ausgestaltetes Zahnrad kämmt, welches wiederum drehfest oder gegebenenfalls über eine weitere Getriebestufe mit der Welle verbunden ist.

Die elektrische Antriebseinrichtung kann eine erste elektrische Maschine sowie eine zweite elektrische Maschine umfassen. Der genannte Rotor der elektrischen Antriebseinrichtung ist somit der Rotor einer der beiden genannten elektrischen Maschinen.

Die Antriebseinheit kann weiterhin eine Kupplung aufweisen, mit der ein Rotor der elektrischen Antriebseinrichtung zur Drehmomentübertragung mit einer Ausgangswelle verbindbar oder verbunden ist.

Weiterhin wird eine Antriebsanordnung zur Verfügung gestellt, die eine erfindungsgemäße Antriebseinheit sowie eine Verbrennungskraftmaschine aufweist, wobei die Verbrennungskraftmaschine drehfest mit dem Drehmoment-Übertragungselement gekoppelt oder koppelbar ist.

Die Verbrennungskraftmaschine ist gegebenenfalls unter Zwischenschaltung einer Trennkupplung an die erste Anschlusseinrichtung des Drehmoment-Übertragungselements angeschlossen. Zu diesem Zweck weist ein von der Verbrennungskraftmaschine kommender Abtrieb bzw. ein daran angeschlossenes Element vorzugsweise eine Außen-Steckverzahnung auf, die mit der als Innen-Steckverzahnung ausgeführten ersten Anschlusseinrichtung in Eingriff gebracht ist.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Es ist dargestellt in
Fig. 1: ein Drehmoment-Übertragungssystem gemäß dem Stand der Technik und
Fig. 2: ein erfindungsgemäßes Drehmoment-Übertragungssystem.

Auf die Figur 1 wurde bereits zur Erläuterung des Standes der Technik Bezug genommen.

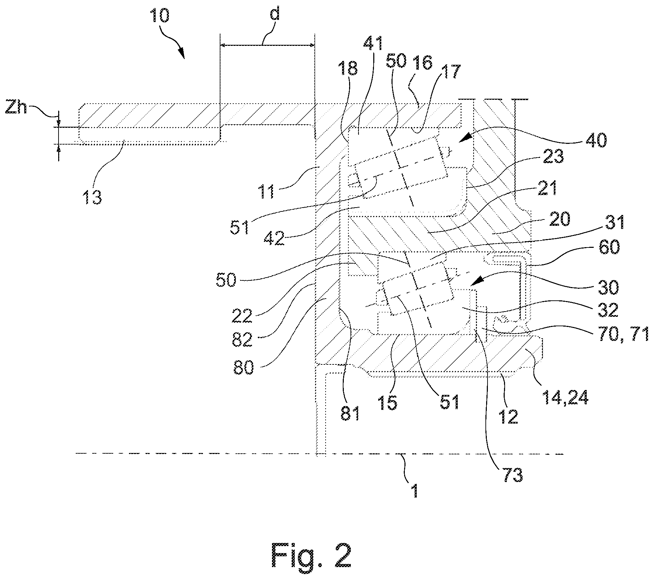

In Fig. 2 ist ein erfindungsgemäßes Drehmoment-Übertragungssystem 10 dargestellt. Ähnlich wie das in Figur 1 dargestellte Drehmoment-Übertragungssystem 10 umfasst auch das erfindungsgemäße Drehmoment-Übertragungssystem 10 ein Drehmoment-Übertragungselement 11 und ein Stützelement 20, wobei das Drehmoment-Übertragungselement 11 als ein Hohlrad ausgeführt ist und das Stützelement 20 ein rotationsfester Bestandteil eines Gehäuses, wie zum Beispiel eines Gehäuses eines Antriebsaggregats, ist.

Das Drehmoment-Übertragungselement 11 weist im dargestellten Querschnitt einen sich radial erstreckenden Steg 80 auf, wobei das Drehmoment-Übertragungselement 11 an der ersten axialen Seite 81 des Stegs 80 eine erste Anschlusseinrichtung 12 und an der zweiten axialen Seite 82 des Stegs 80 eine zweite Anschlusseinrichtung 13 ausgebildet.

Die erste Anschlusseinrichtung 12 ist als eine Innenverzahnung, insbesondere eine Steckverzahnung, ausgestaltet und dient zur drehfesten Kopplung des Drehmoment-Übertragungselements 11 mit einem ersten Aggregat, wie z.B. einer Verbrennungskraftmaschine.

Die zweite Anschlusseinrichtung 13 ist ebenfalls als eine Innenverzahnung, insbesondere eine Innen-Schrägverzahnung, ausgestaltet und dient zur drehfesten Kopplung des Drehmoment-Übertragungselements 11 mit einem zweiten Aggregat, wie z.B. einer elektrische Antriebseinrichtung, die sowohl als Elektromotor als auch als elektrischer Generator funktionieren kann.

Die zweite Anschlusseinrichtung 13 ist an einer radialen Innenseite eines axialen Fortsatzes eines Abschnitts eines Hohlzylinders 16 des Drehmoment-Übertragungselements 11 angeordnet, wobei axial zwischen der zweiten Anschlusseinrichtung 13 und der zweiten axialen Seite 82 des Stegs 80 ein Werkzeugauslauf d ausgebildet ist. Der Werkzeugauslauf d dient der Realisierung eines genügenden Freiraums eines Werkzeugs bei der Herstellung der zweiten Anschlusseinrichtung 12, wie zum Beispiel beim Fräsen oder Wälzschälen. Der Werkzeugauslauf d, gemessen von einem dem Steg 80 zugewandten Ende der zweiten Anschlusseinrichtung 13, bis zum Steg 80 selbst steht im Verhältnis d > 5 Zh zu einer Zahnhöhe Zh der Zähne der zweiten Anschlusseinrichtung 13.

Die erste Anschlusseinrichtung 12 ist an einer Innenwandung eines in dieser Ausführungsform als ein weiterer Hohlzylinder 24 ausgebildeten Zylinders 14 des Drehmoment-Übertragungselements 11 ausgebildet.

Das Stützelement 20 ist auf der zweiten axialen Seite 82 des Stegs 80 angeordnet und bildet einen im Wesentlichen hohlzylinderförmigen Absatz 21 aus.

Das Drehmoment-Übertragungselement 11 bildet eine Außenseite 15 eines in dieser Ausführungsform ebenfalls als weiteren Hohlzylinder 24 realisierten Zylinders 14 aus und diesbezüglich radial außen weiterhin eine Innenseite 17 eines Hohlzylinders 16 aus. Der Absatz 21 des Stützelements 20 ist dabei in radialer Richtung zwischen der Außenseite 15 des Zylinders 14 und der Innenseite 17 des Hohlzylinders 16 angeordnet, wobei zwischen der Außenseite 15 des Zylinders 14 und dem Absatz 21 ein erstes Drehlager 30 und zwischen dem Absatz 21 und der Innenseite 17 des Hohlzylinders 16 ein zweites Drehlager 40 angeordnet ist.

Die Außenseite 15 des Zylinders 14, die Innenseite 17 des Hohlzylinders 16 und der Absatz 21 erstrecken sich dabei im Wesentlichen koaxial zu einer Rotationsachse 1 des Drehmoment-Übertragungselements 11.

Die Drehlager 30, 40 weisen dabei eine im Wesentlichen gleiche axiale Position in Bezug zur gemeinsamen Rotationsachse 1 auf.

Das erste Drehlager 30 liegt mit seinem Außenring 31 in radialer Richtung an der radialen Innenseite des Absatzes 21 des Stützelements 20 an. In axialer Richtung liegt das erste Drehlager 30 an einer dem Steg 80 axial abgewandten Seite eines nach radial innen verlaufenden Vorsprungs 22 des Absatzes 21 des Stützelements 20 an. Mit seinem Innenring 32 liegt das erste Drehlager 30 in radialer Richtung an der radialen Außenseite 15 des Zylinders 14 bzw. des weiteren Hohlzylinders 24 an. In axialer Richtung liegt das erste Drehlager 30 an einer Ausgleichsscheibe 73 an. Die Ausgleichsscheibe 73 ist dabei auf der dem ersten Drehlager 30 gegenüberliegenden axialen Seite durch ein als Sicherungsring 72 ausgeführtes Sicherungselement 70 axial fixiert und dient der Einstellung des axialen Abstandes zwischen Sicherungselement 70 und erstem Drehlager 30. Der Sicherungsring 72 ist dazu in einer umlaufenden Nut auf der radialen Außenseite 15 des Zylinders 14 bzw. des weiteren Hohlzylinders 24 formschlüssig angeordnet, so dass eine axiale Position des ersten Drehlagers 30 gesichert ist.

Das zweite Drehlager 40 liegt mit seinem Außenring 41 in radialer Richtung an der radialen Innenseite 17 des Hohlzylinders 16 und in axialer Richtung an einem radial verlaufenden Abschnitt 18 des Drehmoment-Übertragungselements 11 an. Mit seinem Innenring 42 liegt das zweite Drehlager 40 in radialer Richtung an der radialen Außenseite des Absatzes 21 des Stützelements 20 und in axialer Richtung an einem vom Abschnitt 21 des Stützelements 20 ausgebildeten, nach radial außen verlaufenden Abschnitt 23 an.

Die beiden Drehlager 30, 40 sind als Kegelrollenlager ausgeführt, wobei die Drucklinien 50 beider Drehlager 30, 40 in Bezug auf die gemeinsame Rotationsachse 1 eine Steigung mit gleichem Vorzeichen haben. Die Drucklinie 50 des ersten Drehlagers 30 verläuft somit im Wesentlichen parallel zur Drucklinie 50 des zweiten Drehlagers 40. Die Steigung einer jeweiligen Drehachse 51 eines Drehlagers 30, 40 weist entsprechend ein jeweils entgegengesetztes Vorzeichen in Bezug auf die gemeinsame Rotationsachse 1 auf als die Steigung der jeweiligen Drucklinie 50. Die Drehachsen 51 der Drehlager 30, 40 verlaufen somit im Wesentlichen parallel zueinander.

Dies gewährleistet eine axiale Verspannung des Drehmoment-Übertragungselements 11 in Bezug zum Stützelement 20, so dass die axiale Position des Drehmoment-Übertragungselements 11 in Bezug zur axialen Position des Stützelements 20 gesichert ist.

Mit dem erfindungsgemäßen Drehmoment-Übertragungssystem sowie der Antriebseinheit und Antriebsanordnung lässt sich kostengünstig in konstruktiv einfacher Weise ein geringer axialer Bauraumbedarf realisieren.

### Bezugszeichenliste

- 1: Rotationsachse
- 10: Drehmoment-Übertragungssystem
- 11: Drehmoment-Übertragungselement
- 12: erste Anschlusseinrichtung
- 13: zweite Anschlusseinrichtung
- 14: Zylinder
- 15: Außenseite des Zylinders
- 16: Hohlzylinder
- 17: Innenseite des Hohlzylinders
- 18: radial verlaufender Abschnitt
- 20: Stützelement
- 21: Absatz
- 22: Vorsprung
- 23: nach radial außen verlaufender Abschnitt
- 24: weiterer Hohlzylinder
- 30: erstes Drehlager
- 31: Außenring des ersten Drehlagers
- 32: Innenring des ersten Drehlagers
- 40: zweites Drehlager
- 41: Außenring des zweiten Drehlagers
- 42: Innenring des zweiten Drehlagers
- 50: Drucklinie
- 51: Drehachse
- 60: Dichtung
- 70: Sicherungselement
- 71: Mutter
- 72: Sicherungsring
- 73: Ausgleichsscheibe
- 80: Steg
- 81: erste axiale Seite
- 82: zweite axiale Seite
- d: Werkzeugauslauf
- Zh: Zahnhöhe

## Patentansprüche

1. Drehmoment-Übertragungssystem (10) zur Übertragung eines Drehmoments von wenigstens einem Antriebsaggregat, umfassend ein Drehmoment-Übertragungselement (11) sowie ein das Drehmoment-Übertragungselement (11) mittels Drehlager (30,40) stützendes Stützelement (20), wobei das Drehmoment-Übertragungselement (11) ein Hohlrad ist und eine erste Anschlusseinrichtung (12), ausgebildet als eine erste Verzahnung, zur drehfesten Kopplung des Drehmoment-Übertragungselements (11) mit einem ersten Aggregat, sowie eine zweite Anschlusseinrichtung (13), ausgestaltet als eine Innen-Verzahnung, zur Kopplung des Drehmoment-Übertragungselements (11) mit einem zweiten Aggregat aufweist, und eines der beiden Elemente Drehmoment-Übertragungselement (11) und Stützelement (20) einen im Wesentlichen hohlzylinderförmigen Absatz (21) ausbildet, und das jeweils andere Element eine Außenseite (15) eines Zylinders (14) ausbildet und diesbezüglich radial außen eine Innenseite (17) eines Hohlzylinders 16 ausbildet, wobei der Absatz (21) in radialer Richtung zwischen der Außenseite (15) des Zylinders (14) und der Innenseite (10) des Hohlzylinders (16) angeordnet ist, und zwischen der Außenseite (15) des Zylinders (14) und dem Absatz (21) ein erstes Drehlager (30) und zwischen dem Absatz (21) und der Innenseite (10) des Hohlzylinders (16) ein zweites Drehlager (40) angeordnet ist, und wobei weiter das Drehmoment-Übertragungselement (11) einen sich radial erstreckenden Steg (80) aufweist, wobei das Drehmoment-Übertragungselement (11) an einer ersten axialen Seite (81) des Stegs (80) die erste Anschlusseinrichtung (12) und an einer zweiten axialen Seite (82) des Stegs (80) die zweite Anschlusseinrichtung (13) ausbildet.

2. Drehmoment-Übertragungssystem nach Anspruch 1, **dadurch gekennzeichnet, dass** die beiden Drehlager (30,40) im Wesentlichen die gleiche axiale Position in Bezug zu einer gemeinsamen Rotationsachse (1) aufweisen.

3. Drehmoment-Übertragungssystem nach Anspruch 2, **dadurch gekennzeichnet, dass** beide Drehlager (30,40) als Kegelrollenlager ausgeführt sind, wobei die Drucklinien (50) beider Lager in Bezug auf die gemeinsame Rotationsachse (1) eine Steigung mit gleichem Vorzeichen haben.

4. Drehmoment-Übertragungssystem nach einem der vorhergehenden Ansprüche, **dadurch gekennzeichnet, dass** der Absatz (21) einen von der Hohlzylinderform nach radial innen verlaufenden Vorsprung (22) aufweist zur axialen Anlage eines Außenrings (31) des ersten Drehlagers (30) und einen von der Hohlzylinderform nach radial außen verlaufenden Abschnitt (23) aufweist zur axialen Anlage eines Innenrings (42) des zweiten Drehlagers (40).

5. Drehmoment-Übertragungssystem nach einem der vorhergehenden Ansprüche, **dadurch gekennzeichnet, dass** eines der beiden Elemente Drehmoment-Übertragungselement (11) und Stützelement (20) einen radial verlaufenden Abschnitt (18) aufweist zur axialen Anlage eines Außenrings (41) des zweiten Drehlagers (40).

6. Drehmoment-Übertragungssystem nach einem der vorhergehenden Ansprüche, **dadurch gekennzeichnet, dass** der Zylinder (14) als ein weiterer Hohlzylinder (24) ausgebildet ist und die erste Anschlusseinrichtung (12) an der Innenwandung dieses weiteren Hohlzylinders (24) ausgebildet ist.

7. Drehmoment-Übertragungssystem nach einem der vorhergehenden Ansprüche, **dadurch gekennzeichnet, dass** das Drehmoment-Übertragungselement (11) einen im Wesentlichen radial verlaufenden Steg (80) aufweist, an dessen erster axialer Seite (81) die Drehlager (30,40) angeordnet sind, und an dessen zweiter, axial gegenüberliegender axialer Seite (82) die zweite Anschlusseinrichtung (13) als zweite Verzahnung ausgebildet ist, wobei entlang der axialen Richtung zwischen der zweiten Verzahnung und dem Steg (80) ein Werkzeugauslauf (d) vorhanden ist.

8. Drehmoment-Übertragungssystem nach einem der vorhergehenden Ansprüche, **dadurch gekennzeichnet, dass** das Stützelement (20) den im Wesentlichen hohlzylinderförmigen Absatz (21) ausbildet, und das Drehmoment-Übertragungselement (11) die Außenseite (15) des Zylinders (14) ausbildet und diesbezüglich radial außen die Innenseite (17) des Hohlzylinders (16) ausbildet.

9. Antriebseinheit für einen Antriebsstrang eines elektrisch antreibbaren Kraftfahrzeugs, insbesondere eines Hybridkraftfahrzeuges, mit einem Drehmoment-Übertragungssystem (10) gemäß einem der Ansprüche 1 bis 8 sowie mit einer elektrischen Antriebseinrichtung und einer Welle, wobei ein Rotor der elektrischen Antriebseinrichtung drehfest mit der Welle verbunden ist und die Welle mit dem Drehmoment-Übertragungselement (11) des Drehmoment-Übertragungssystems (10) zur Übertragung eines Drehmoments gekoppelt ist.

10. Antriebsanordnung mit einer Antriebseinheit gemäß Anspruch 9 sowie mit einer Verbrennungskraftmaschine, die drehfest mit dem Drehmoment-Übertragungselement (11) gekoppelt oder koppelbar ist.

## Claims

1. A torque transmission system (10) for transmitting a torque from at least one drive unit, comprising a torque transmission element (11) and a support element (20) supporting the torque transmission element (11) by means of pivot bearings (30, 40), wherein the torque transmission element (11) is a ring gear and has a first connection device (12), formed as a first toothing, for non-rotatable coupling of the torque transmission element (11) to a first unit, and a second connection device (13), configured as an internal toothing, for coupling the torque transmission element (11) to a second unit, and one of the two elements, torque transmission element (11) and support element (20), forms a substantially hollow cylindrical shoulder (21), and the respective other element forms an outside (15) of a cylinder (14) and, radially to the outside relative thereto, forms an inside (17) of a hollow cylinder (16), wherein the shoulder (21) is arranged in the radial direction between the outside (15) of the cylinder (14) and the inside (10) of the hollow cylinder (16), and a first pivot bearing (30) is arranged between the outside (15) of the cylinder (14) and the shoulder (21) and a second pivot bearing (40) is arranged between the shoulder (21) and the inside (10) of the hollow cylinder (16), and wherein moreover the torque transmission element (11) has a radially extending web (80), wherein the torque transmission element (11) forms the first connection device (12) on a first axial side (81) of the web (80) and the second connection device (13) on a second axial side (82) of the web (80).

2. The torque transmission system according to claim 1, **characterised in that** the two pivot bearings (30, 40) have substantially the same axial position in relation to a common axis of rotation (1).

3. The torque transmission system according to claim 2, **characterised in that** the two pivot bearings (30, 40) are embodied as tapered roller bearings, wherein the lines of action (50) of the two bearings have a gradient with the same sign in relation to the common axis of rotation (1).

4. The torque transmission system according to one of the preceding claims, **characterised in that** the shoulder (21) has a projection (22) extending radially inwards from the hollow cylindrical shape for axial contact with an outer ring (31) of the first pivot bearing (30) and a portion (23) extending radially outwards from the hollow cylindrical shape for axial contact with an inner ring (42) of the second pivot bearing (40).

5. The torque transmission system according to one of the preceding claims, **characterised in that** one of the two elements, torque transmission element (11) and support element (20), has a radially extending portion (18) for axial contact with an outer ring (41) of the second pivot bearing (40).

6. The torque transmission system according to one of the preceding claims, **characterised in that** the cylinder (14) is formed as a further hollow cylinder (24) and the first connection device (12) is formed on the inner wall of this further hollow cylinder (24).

7. The torque transmission system according to one of the preceding claims, **characterised in that** the torque transmission element (11) has a substantially radially extending web (80), on the first axial side (81) of which the pivot bearings (30, 40) are arranged, and on the second, axially opposing axial side (82) of which the second connecting device (13) is formed as a second toothing, wherein room (d) for tool movement is present along the axial direction between the second toothing and the web (80).

8. The torque transmission system according to one of the preceding claims, **characterised in that** the support element (20) forms the substantially hollow cylindrical shoulder (21), and the torque transmission element (11) forms the outside (15) of the cylinder (14) and, radially to the outside relative thereto, forms the inside (17) of the hollow cylinder (16).

9. A drive unit for a drive train of an electrically drivable motor vehicle, in particular a hybrid motor vehicle, with a torque transmission system (10) according to one of claims 1 to 8 and with an electric drive device and a shaft, wherein a rotor of the electric drive device is connected non-rotatably to the shaft and the shaft is coupled to the torque transmission element (11) of the torque transmission system (10) for transmitting a torque.

10. A drive arrangement with a drive unit according to claim 9 and with an internal combustion engine which is coupled or couplable non-rotatably to the torque transmission element (11).

## Revendications

1. Système de transmission de couple (10) permettant de transmettre un couple à partir d'au moins un groupe d'entraînement, comprenant un élément de transmission de couple (11), ainsi qu'un élément support (20) supportant l'élément de transmission de couple (11) au moyen de paliers rotatifs (30, 40), dans lequel l'élément de transmission de couple (11) est une couronne et un premier dispositif de raccordement (12), conçu sous la forme d'une première denture, destiné à l'accouplement fixe en rotation de l'élément de transmission de couple (11) à un premier groupe, ainsi qu'un second dispositif de raccordement (13), conçu sous la forme d'une denture interne, destiné à l'accouplement de l'élément de transmission de couple (11) à un second groupe, et l'un des deux éléments parmi l'élément de transmission de couple (11) et l'élément support (20) forme un épaulement (21) sensiblement cylindrique creux, et l'autre élément respectif forme un côté extérieur (15) d'un cylindre (14) et forme ainsi radialement vers l'extérieur un côté intérieur (17) d'un cylindre creux (16), dans lequel l'épaulement (21) est disposé dans la direction radiale entre le côté extérieur (15) du cylindre (14) et le côté intérieur (10) du cylindre creux (16), et entre le côté extérieur (15) du cylindre (14) et l'épaulement (21), un premier palier rotatif (30) et entre l'épaulement (21) et le côté intérieur (10) du cylindre creux (16), un second palier rotatif (40) sont disposés, et dans lequel l'élément de transmission de couple (11) présente en outre un élément jointif (80) s'étendant radialement, dans lequel l'élément de transmission de couple (11) forme sur un premier côté (81) axial de l'élément jointif (80) le premier dispositif de raccordement (12) et sur un second côté (82) axial de l'élément jointif (80) le second dispositif de raccordement (13).

2. Système de transmission de couple selon la revendication 1, **caractérisé en ce que** les deux paliers rotatifs (30, 40) présentent essentiellement la même position axiale par rapport à un axe de rotation (1) commun.

3. Système de transmission de couple selon la revendication 2, **caractérisé en ce que** les deux paliers rotatifs (30, 40) sont conçus sous la forme de roulements à rouleaux coniques, dans lequel les conduites de pression (50) des deux roulements présentent une pente de même signe par rapport à l'axe de rotation (1) commun.

4. Système de transmission de couple selon l'une des revendications précédentes, **caractérisé en ce que** l'épaulement (21) présente une saillie (22) s'étendant radialement de la forme cylindrique creuse vers l'intérieur, destinée à l'appui axial d'une bague extérieure (31) du premier palier rotatif (30) et présente une section (23) s'étendant radialement de la forme cylindrique creuse vers l'extérieur, destinée à l'appui axial d'une bague intérieure (42) du second palier rotatif (40).

5. Système de transmission de couple selon l'une des revendications précédentes, **caractérisé en ce que** l'un des deux éléments parmi l'élément de transmission de couple (11) et l'élément support (20) présente une section (18) s'étendant radialement destinée à l'appui axial d'une bague extérieure (41) du second palier rotatif (40).

6. Système de transmission de couple selon l'une des revendications précédentes, **caractérisé en ce que** le cylindre (14) est conçu sous la forme d'un autre cylindre creux (24) et le premier dispositif de raccordement (12) est conçu sur la paroi intérieure de cet autre cylindre creux (24).

7. Système de transmission de couple selon l'une des revendications précédentes, **caractérisé en ce que** l'élément de transmission de couple (11) présente un élément jointif (80) s'étendant sensiblement radialement, sur le premier côté (81) axial duquel sont disposés les paliers rotatifs (30, 40), et sur le second côté (82) axial axialement opposé duquel le second dispositif de raccordement (13) est conçu sous la forme d'une seconde denture, dans lequel le long de la direction axiale entre la seconde denture et l' élément jointif (80), une sortie d'outil (d) est fournie.

8. Système de transmission de couple selon l'une des revendications précédentes, **caractérisé en ce que** l'élément support (20) forme l'épaulement (21) essentiellement cylindrique creux et l'élément de transmission de couple (11) forme le côté extérieur (15) du cylindre (14) et forme ainsi radialement vers l'extérieur le côté intérieur (17) du cylindre creux (16).

9. Unité d'entraînement pour une chaîne cinématique d'un véhicule automobile à entraînement électrique, en particulier d'un véhicule automobile hybride, comportant un système de transmission de couple (10) selon l'une des revendications 1 à 8 ainsi que comportant un dispositif d'entraînement électrique et un arbre, dans laquelle un rotor du dispositif d' entraînement électrique est relié de manière fixe en rotation à l'arbre et l'arbre est accouplé à l'élément de transmission de couple (11) du système de transmission de couple (10) pour transmettre un couple.

10. Ensemble d'entraînement comportant une unité d'entraînement selon la revendication 9 ainsi que comportant un moteur à combustion interne, lequel est accouplé ou peut être accouplé de manière fixe en rotation à l'élément de transmission de couple (11).
